# EUROPÄISCHE PATENTSCHRIFT

(11) **EP 1 054 180 B1**
(45) Veröffentlichungstag und Bekanntmachung des Hinweises auf die Patenterteilung: **21.06.2006**
(21) Anmeldenummer: 00109881.3
(22) Anmeldetag: 10.05.2000
(51) Int. Cl.: F16D 65/18

(54) **Scheibenbremse mit Feststellbremsfunktion**
Disc brake including parking brake option
Frein à disque avec fonction de freinage de stationnement

(30) Priorität: 14.05.1999 DE 19922333
(43) Veröffentlichungstag der Anmeldung: 22.11.2000
(73) Patentinhaber: Continental Teves AG & Co. oHG, 60488 Frankfurt (DE)
(72) Erfinder: Thiel, Rudolf, 60488 Frankfurt (DE); Bauer, Jürgen, 65187 Wiesbaden (DE); Keferstein, Hans-Georg, 64291 Darmstadt (DE)

(56) Entgegenhaltungen:
- DE-A- 19 853 721
- US-A- 3 701 400
- US-A- 3 900 084

## Beschreibung

Die Erfindung betrifft eine Scheibenbremse mit Feststellbremsfunktion, insbesondere für Kraftfahrzeuge, mit einem Bremsgehäuse, welches einen verschiebbar darin angeordneten Bremskolben zur hydraulischen Zuspannung aufnimmt und mit einer separat betätigbaren Feststellbremseinrichtung gemäß dem Oberbegriff des Patentanspruches 1.

Aus der DE 196 48 581 A1 ist beispielsweise eine Scheibenbremse mit Feststellbremsfunktion bekannt, bei der in einem Bremsgehäuse zur hydraulischem Betätigung ein Bremskolben verschiebbar angeordnet ist, und der Bremskolben außerdem mit einer separat betätigbaren Feststelleinrichtung im zugespannten Zustand der Bremse festgesetzt werden kann. Üblicherweise wird eine derartige kombinierte Scheibenbremse während einer Betriebsbremsung hydraulisch betätigt und während einer Feststellbremsung im hydraulisch zugespannten Zustand mittels einer mechanischen Feststelleinrichtung verriegelt. Dabei weist die Feststelleinrichtung eine drehbare Betätigungswelle auf, die über zwischengeschaltete Kupplungsmittel auf eine Spindelwelle einer Mutter-Spindel-Anordnung einwirkt. Dadurch kann die hydraulisch zugespannte Bremse mittels Drehung der Betätigungswelle bzw. Spindelwelle verriegelt werden und somit die Feststellbremsfunktion realisieren. Als nachteilig erweist es sich bei einer derartigen Anordnung, daß zum Lösen der festgestellten Bremse und zum Entspannen der Feststelleinrichtung ein dem zuspanndruck entsprechender hydraulischer Druck erneut aufgebaut werden muß, um die Verriegelung durch Drehung der Betätigungswelle in entgegender Zuspannrichtung wieder zu lösen. Ein einfaches Entriegeln der zugespannten Bremse ohne erneuten hydraulischen Druckaufbau ist aufgrund der hohen Spannkräfte innerhalb der Feststelleinrichtung nicht möglich.

Ausgehend vom genannten Stand der Technik besteht somit die Aufgabe der Erfindung darin, eine kombinierte Scheibenbremse mit Feststellbremsfunktion anzugeben, die mit einfachen Mitteln im hydraulisch zugespannten Zustand zu verriegeln und zu lösen ist.

Gelöst wird die Aufgabe durch die Merkmalskombination des Patentanspruches 1. Dabei besitzt die Scheibenbremse einen in einem Bremsgehäuse verschiebbar angeordneten Bremskolben zur hydraulischen Zuspannung sowie eine separat betätigbare Feststellbremseinrichtung, die eine Betätigungswelle und eine mit dieser mechanisch koppelbare, sich am Bremskolben abstützende Mutter-Spindel-Anordnung aufweist. Zur Übertragung eines Drehmomentes ausgehend von der Betätigungswelle auf die Mutter-Spindel-Anordnung umfaßt die Feststellbremseinrichtung eine Wälzkörperrampenvorrichtung. Die Zwischenschaltung der Wälzkörperrampenvorrichtung gestattet bei Erreichen einer jeweiligen Anschlagposition die einfache Übertragung von Drehmomenten sowohl in Zuspann- wie auch in Löserichtung der Scheibenbremse. Weiterhin besitzt die Wälzkörperrampenvorrichtung in Abhängigkeit von der Drehrichtung der Betätigungswelle bzw. der jeweiligen Anschlagposition unterschiedliche axiale Abmessungen in Zuspannrichtung des Bremskolbens. Dadurch werden während des Lösens der hydraulisch zugespannten Bremse durch Verdrehung der Wälzkörperrampenvorrichtung zunächst die Spannkräfte aus der Feststellbremseinrichtung genommen, um dann eine einfache Entriegelung der Bremse mittels weiterer Drehung der Betätigungswelle bei Anschlagposition der Wälzkörperrampenvorrichtung zu gestatten.

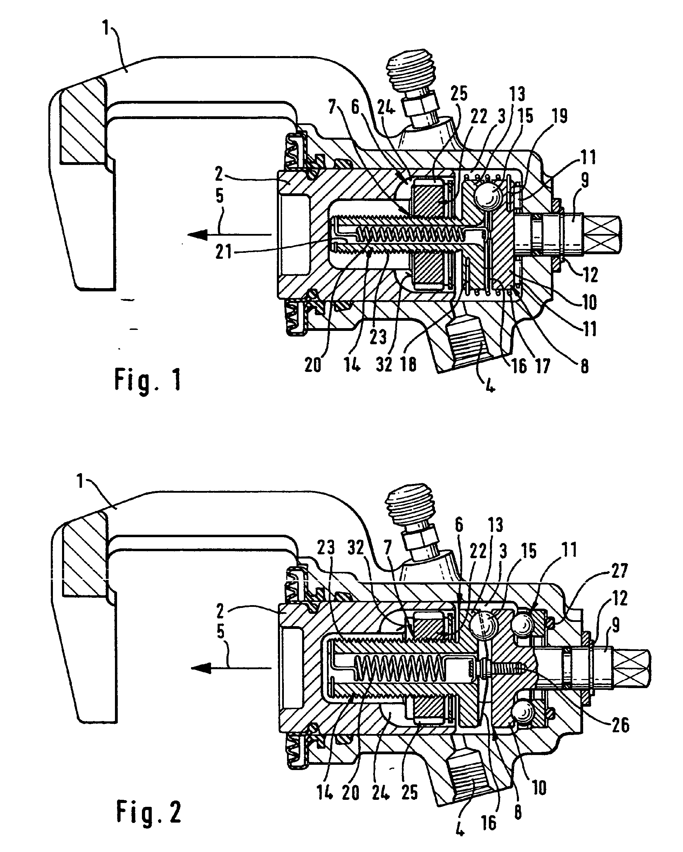

Gemäß einer bevorzugten Ausführungsvariante der Erfindung ist die Wälzkörperrampenvorrichtung im wesentlichen aus zwei relativ zueinander verdrehbaren Rampenscheiben mit dazwischen liegenden Wälzkörpern aufgebaut, wobei eine erste Rampenscheibe drehfest an der Betätigungswelle und eine zweite Rampenscheibe drehfest an einer Spindelwelle bzw. einer Mutter der Mutter-Spindel-Anordnung angeordnet ist. Dabei ist das jeweils nicht mit der zweiten Rampenscheibe drehfest verbundene Element der Mutter-Spindel-Anordnung, das heißt entweder die Mutter oder die Spindelwelle, verdrehfest am Bremskolben angeordnet. Dadurch ist bei Drehung der Betätigungswelle und entsprechender Drehmomentübertragung durch die Wälzkörperrampenvorrichtung die Spindelwelle derart gegenüber der Mutter verdrehbar, daß sich die axiale Länge der Mutter-Spindel-Anordnung in Zuspannrichtung der Bremse ändert. Beispielsweise wirkt die Betätigungswelle über die Wälzkörperrampenvorrichtung - wie in den Figuren 1, 2 gezeigt - auf die Spindelwelle ein, wobei sich die Mutter durch Drehung der Spindelwelle in bzw. entgegen der Zuspannrichtung des Bremskolbens verschieben läßt und entsprechend auf den Bremskolben einwirkt. Die Mutter ist dabei insbesondere über ein selbsthemmendes Gewinde drehbar an der Spindelwelle angeordnet, wodurch die Feststellbremseinrichtung im festgesetzten Zustand keiner zusätzlichen Verriegelungsmittel bedarf.

In einer vorteilhaften Ausführung der Erfindung besitzt zumindest eine der Rampenscheiben wenigstens eine Rampenbahn, in der ein oder mehrere Wälzkörper aufgenommen sind. Die im wesentlichen nutförmigen Rampenbahnen sind bezogen auf die Zuspannrichtung geneigt angeordnet und besitzen an beiden Enden einen Anschlag für den Wälzkörper. Dadurch ist die Wälzkörperrampenvorrichtung in der Lage, ein Drehmoment zu übertragen, falls sich der Wälzkörper in einer Anschlagposition am Ende der Rampenbahn befindet. Vorzugsweise sind mehrere Rampenbahnen, die jeweils mit einem einzelnen Wälzkörper besetzt sind, gleichmäßig verteilt auf der Rampenscheibe angeordnet. Eine besonders einfache Gestaltung ergibt sich, wenn in den im wesentlichen nutförmigen Rampenbahnen kegelförmige oder kugelförmige Wälzkörper angeordnet sind.

In einer Weiterbildung der Erfindung sind die beiden Rampenscheiben mittels einer bzw. mehrerer Federn gegeneinander verspannt. Diese Federverspannung bezieht sich einerseits auf die Drehrichtung der Wälzkörperrampenvorrichtung und andererseits auf die axiale Zuspannrichtung des Bremskolbens. Im einzelnen ist in einer ersten Variante eine Drehfeder zur Verspannung der beiden Rampenscheiben in Drehrichtung und eine Axialfeder zur Verspannung der Rampenscheiben in Zuspannrichtung vorgesehen. In einer weiteren Variante können die beiden Federfunktionen in einer einzigen Feder kombiniert werden, die vorzugsweise als vorgespannte Spiralfeder ausgeführt ist. Besonders vorteilhaft sind die beiden Rampenscheiben entgegen der Zuspanndrehrichtung der Betätigungswelle gegeneinander verspannt. In dieser Position der Rampenscheiben befinden sich die Wälzkörper in ihrer Anschlagposition zur Übertragung eines

Zuspanndrehmomentes und gestatten dadurch die sofortige Verriegelung der hydraulisch zugespannten Bremse bei Drehung der Betätigungswelle entsprechend in Zuspannrichtung. Weiterhin befindet sich der Wälzkörper im Falle der genannten Anschlagposition auf einem Rampenbahnabschnitt, der senkrecht zur Zuspannrichtung des Bremskolbens verläuft und somit gerade keine Neigung aufweist. Auf den Wälzkörper wird also in dieser Position keine Kraftkomponente in Umfangsrichtung infolge einer etwaigen Neigung der Rampenbahn übertragen. Dadurch wird bei Verriegelung der hydraulisch zugespannten Bremse ein selbsttätiges Zurückdrehen der Wälzkörperrampenvorrichtung und damit ein Lösen der Bremse vermieden.

Zur besonders komfortablen und vielfältigen Ausführung der Feststellbremsfunktionalität empfiehlt es sich, die Betätigungswelle zum Verriegeln bzw. Lösen der Feststellbremseinrichtung mittels eines Elektromotoraggregates anzutreiben. Dadurch ist eine exakte sowie funktionssichere Umsetzung der Feststellbremsfunktion innerhalb der kombinierten Scheibenbremse möglich.

Ausführungsbeispiele der Erfindung werden anhand der Zeichnungen dargestellt und im folgenden näher erläutert.

Es zeigen:
- Fig. 1+2: zwei Varianten einer Scheibenbremse mit integrierter Feststellbremseinrichtung in geschnittener Darstellung,
- Fig. 3+4: zwei Varianten einer Feststellbremseinrichtung in räumlicher Darstellung,
- Fig. 5: mehrere schematische Abbildungen einer Wälzkörperrampenvorrichtung in verschiedenen Betätigungspositionen.

Die in den Figuren 1 und 2 gezeigte Scheibenbremse mit Feststellbremsfunktion besitzt ein Bremsgehäuse 1 mit einem verschiebbar darin angeordneten Bremskolben 2. Der Bremskolben 2 wiederum steht in bekannter Weise in Verbindung mit einem nicht gezeigte Reibelement, das zur Anlage an einer Bremsscheibe vorgesehen ist. Zur üblichen Betriebsbremsfunktion ist der vom Bremskolben 2 begrenzte Druckraum 3 über eine Druckleitung 4 mit hydraulischem Druck beaufschlagbar und kann dadurch in Zuspannrichtung 5 der Bremse aus dem Bremsgehäuse 1 bewegt werden. Zur Realisierung der Feststellbremsfunktion ist im Bremsgehäuse eine von der hydraulischen Betätigung vollständig unabhängige, separat betätigbare Feststellbremseinrichtung 6 vorgesehen. Die Feststellbremseinrichtung 6 umfaßt im wesentlichen eine im Kolben angeordnete Mutter-Spindel-Anordnung 7, eine Wälzkörperrampenvorrichtung 8 sowie eine entgegen der Zuspannrichtung 5 aus dem Gehäuse herausragende Betätigungswelle 9. Besonders vorteilhaft ist die Betätigungswelle 9 mit einem Elektromotoraggregat verbunden zur entsprechenden Einleitung eines Drehmomentes in die Betätigungswelle. Alternativ dazu kann die Drehbewegung auch mechanisch oder auf sonstigem Wege in die Betätigungswelle 9 eingeleitet werden.

An ihrem sich in das Gehäuse erstreckenden Ende ist die Betätigungswelle 9 mit einer ersten Rampenscheibe 10 der Wälzkörperrampenvorrichtung 8 verbunden. Innerhalb der in den Figuren dargestellten Ausführungsbeispiele ist die erste Rampenscheibe 10 einteilig mit der Betätigungswelle 9 verbunden, wobei die Einheit aus Rampenscheibe und Betätigungswelle gegenüber dem Bremsgehäuse 1 mittels eines Axiallagers 11 drehbar gelagert ist. Zur axialen Fixierung ist die Betätigungswelle 9 mittels eines Befestigungsringes 12 am Bremsgehäuse 1 gehalten. Eine zweite Rampenscheibe 13, die gegenüber der ersten Rampenscheibe 10 verdrehbar angeordnet ist, ist mit der Spindelwelle 14 drehfest verbunden. Vorzugsweise ist die zweite Rampenscheibe 13 einstückig an die Spindelwelle 14 angeformt. Zwischen den beiden Rampenscheiben 10,13 sind mehrere Wälzkörper 15 angeordnet, die insbesondere kugelförmig bzw. kegelförmig ausgebildet sind. Insbesondere bei Verwendung mehrerer Wälzkörper 15 trägt ein die einzelnen Wälzkörper 15 umschließender Käfig 16 dafür Sorge, daß die Wälzkörper über den Umfang der Wälzkörperrampenvorrichtung 8 gleichmäßig verteilt sind. Durch die Aufnahme der Wälzkörper 15 innerhalb von Rampenbahnen innerhalb der beiden Rampenscheiben 10,13 sind diese relativ zueinander verdrehbar, wobei diese Verdrehbarkeit durch Anschläge an den Enden der Rampenbahnen begrenzt ist. Selbstverständlich ist es nicht notwendigerweise erforderlich, die einzelnen Rampenscheiben an der Betätigungswelle 9 bzw. der Spindelwelle 14 einteilig auszubilden, vielmehr können die Rampenscheiben 10,13 als separate Bauteile an der Betätigungswelle 9 bzw. der Spindelwelle 14 befestigt werden. Zum Zusammenhalt der Wälzkörperrampenvorrichtung 8 sind nach Fig. 1 zwei Federn vorgesehen, die die beiden Rampenscheiben 10,13 gegeneinander verspannen. Dabei sorgt eine Drehfeder 17 für eine gegenseitige Verspannung von erster und zweiter Rampenscheibe 10,13 bezogen auf die Drehrichtung der Betätigungswelle 9. Dazu ist die Drehfeder 17 mit einem ersten Ende 18 in der ersten Rampenscheibe 10 und mit einem zweiten Ende 19 in der zweiten Rampenscheibe 13 eingehangen und bewirkt dadurch eine Federvorspannung zwischen den beiden Rampenscheiben. Eine Axialfeder 20 ist mit ihren Enden einerseits an der ersten Rampenscheibe 10 und andererseits an der Spindelwelle 14 befestigt und sorgt für den axialen Zusammenhalt der beiden Rampenscheiben. Dadurch wird verhindert, daß sich die beiden Rampenscheiben bezogen auf die Zuspannrichtung 5 von den Wälzkörpern 15 entfernen. Vorzugsweise ist die Axialfeder 20 in einem Hohlraum 21 der Spindelwelle 14 untergebracht. Bei geeigneter Gestaltung der beiden Federenden der Axialfeder 20 ist es durch verdrehfeste Einhängung der beiden Federenden einerseits an der Spindelwelle 14 und andererseits an der ersten Rampenscheibe 10 möglich, mittels einer einzigen Feder 20 die beiden Rampenscheiben 10,13 sowohl in Drehrichtung als auch in Zuspannrichtung 15 gegeneinander zu verspannen.

Der innerhalb des Gehäuses drehbar angeordneten Spindel ist eine drehfest im Kolben aufgenommene Mutter 22 zugeordnet, die über ein selbsthemmendes Gewinde 23 mit der Spindelwelle 14 verbunden ist. Die Drehsicherung zwischen Kolben 2 und Mutter 22 erfolgt über einen Schlitz 24 im Kolben, in den sich ein entsprechender Vorsprung 25 der Mutter 22 erstreckt. Bei Drehung der Spindelwelle 14 ist somit die Mutter 22 in bzw. entgegen der Zuspannrichtung 5 innerhalb des Kolbens 2 verschiebbar.

In einer Weiterbildung nach Fig. 2 ist die Feder 20 mit einem Ende an einem in der ersten Rampenscheibe 10 befestigten Bolzen 26 eingehangen. Dabei dient der Bolzen 26 einerseits als Einhängungsöse für die Feder 20 und andererseits als Befestigungsmittel für einen auf den Bolzen 26 aufsteckbaren Käfig 16 für die Wälzkörper 15.

Weiterhin ist es gemäß Figur 2 vorteilhaft, die Baueinheit aus Betätigungswelle 9 und erster Rampenscheibe 10 mittels eines axial wirkenden Federringes 27 in Zuspannrichtung 5 spielfrei am Gehäuse zu lagern. Der Federring 27 kann besonders einfach als Gummiring bzw. als sonstiger elastischer Ring ausgeführt sein.

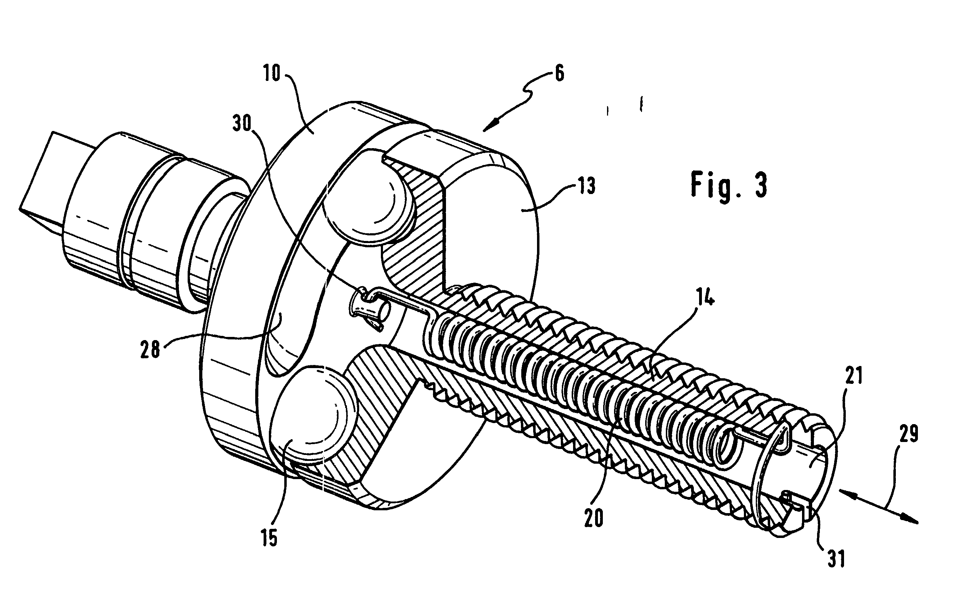

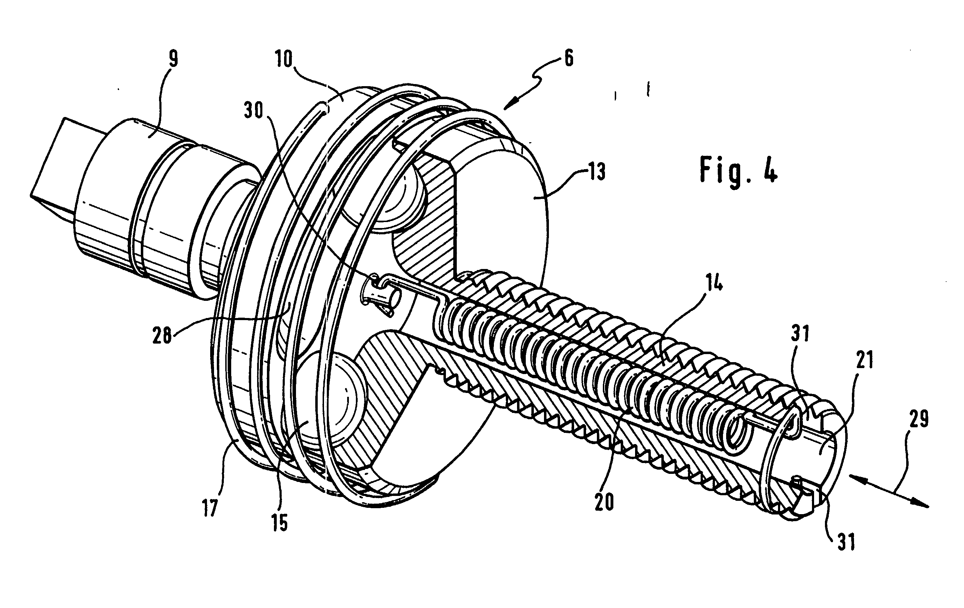

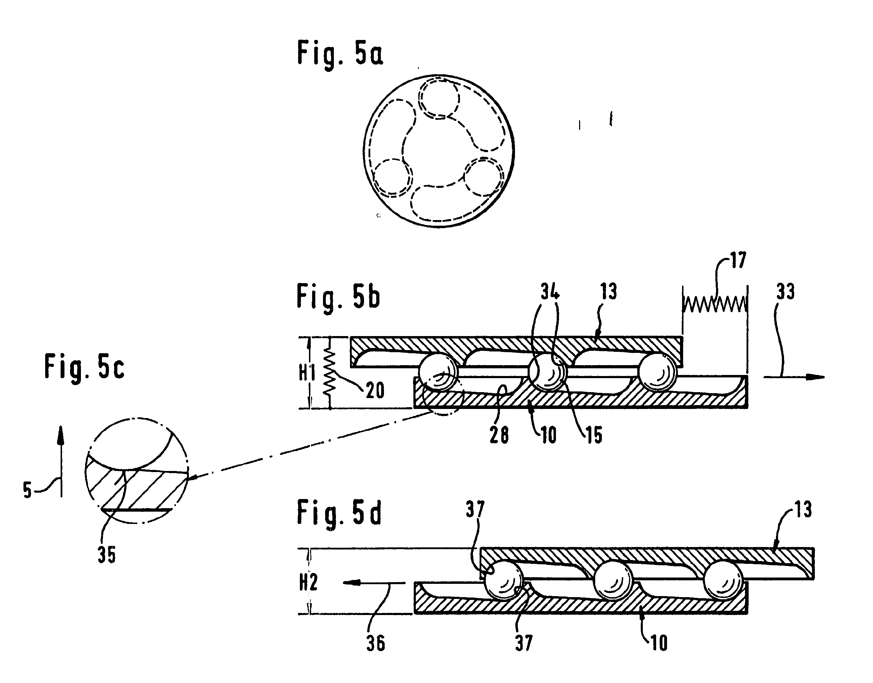

Der genaue Aufbau der Feststellbremseinrichtung 6 wird insbesondere durch die Darstellungen der Fig. 3 und 4 verdeutlicht. Zwischen den beiden Rampenscheiben 10,13 sind mehrere Wälzkörper 15, insbesondere drei Kugeln angeordnet, wodurch die beiden Rampenscheiben 10,13 innerhalb eines begrenzten Winkelbereiches verdrehbar sind. Die einzelnen Wälzkörper 15 sind innerhalb von Rampenbahnen 28 angeordnet, die in Form von Nuten über einen begrenzten Umfangswinkel jeweils in den einander zugewandten Stirnflächen der beiden Rampenscheiben 10,13 angeordnet sind. Die einzelnen Rampenbahnen weisen eine Steigung bzw. eine Neigung auf, das heißt ihre Tiefe ändert sich stetig über dem Umfangswinkel. Die einzelnen Rampenbahnen 28 bilden somit kurze Abschnitte von Schraubenbahnen. Durch Verdrehen der beiden Rampenscheiben 10,13 gegeneinander bewegen sich die Wälzkörper 15 innerhalb ihrer Rampenbahn 28 und verändern dadurch den Abstand der beiden Rampenscheiben 10,13 (siehe Fig. 5). Zum Zusammenhalt der Wälzkörperrampenvorrichtung 6 sind die beiden oben bereits genannten Federn 17,20 vorgesehen. Gemäß Fig. 3 ist nur eine einzige Feder 20 notwendig, die die beiden Rampenscheiben 10,13 sowohl in Achsrichtung 29 als auch in Drehrichtung gegeneinander verspannt. Dazu ist die Feder 20 mit einem erste Ende in einer Öse 30 der ersten Rampenscheibe 10 drehfest eingehakt und mit einem anderen Ende in einer Nut 31 der Spindelwelle 14 drehtest fixiert. Mit ihren zwischen den Enden sich erstreckenden Federwindungen verläuft die Feder 20 in einem Hohlraum 21 der Spindelwelle 14.

Ist die Feder 20 als reine Axialfeder ausgelegt, die lediglich dafür Sorge trägt, daß sich die Rampenscheiben 10,13 nicht von den Wälzkörpern 15 entfernen, ist gemäß Fig. 4 getrennt davon eine Drehfeder 17 erforderlich. Diese Drehfeder 17 dient der Verspannung der beiden Rampenscheiben 10,13 in Drehrichtung.

Die vorteilhafte Funktion der Feststellbremseinrichtung 6 wird in Zusammenschau aller Figuren erkennbar und insbesondere anhand der Fig. 5 mit unterschiedlichen Betriebsstellungen der Wälzkörperrampenvorrichtung 6 schematisch verdeutlicht. Während einer Feststellbremsung wird die hydraulisch zugespannte Scheibenbremse mittels der elektromotorisch angetriebenen Feststellbremseinrichtung 6 mechanisch verriegelt. Dazu wird eine in die Betätigungswelle 9 eingeleitete Zuspanndrehbewegung über die Wälzkörperrampenvorrichtung 8 auf die Spindelwelle 14 übertragen und somit eine Verschiebung der Mutter 22 in Zuspannrichtung 5 innerhalb des Bremskolbens 2 bewirkt. Bei ausreichender Bewegung der Mutter 22 in Zuspannrichtung 5 schlägt die Mutter an einem kolbenseitigen Anschlag 32 an und verriegelt dadurch die hydraulisch zugespannte Bremse. Die sichere Übertragung des Zuspanndrehmomentes durch die Wälzkörperrampenvorrichtung 6 wird dadurch erreicht, daß die beiden Rampenscheiben 10,13 mittels der Drehfeder 17,20 entgegen der Zuspanndrehrichtung 33 gegeneinander verspannt sind. Die einzelnen Wälzkörper 15 befinden sich in dieser Position der beiden Rampenscheiben 10,13 an einem zugehörigen ersten Endanschlag 34 der zugehörigen Rampenbahn 28, der der Übertragung des Zuspanndrehmomentes dient. In dieser Position der Wälzkörper am Endanschlag 34 befinden sich die Wälzkörper in einem Rampenbahnabschnitt 35, der senkrecht zur Zuspannrichtung 5 verläuft. Dadurch liegen die einzelnen Wälzkörper 15 in ihrer Position am Endanschlag 34 auf einer ebenen Fläche ohne Neigung auf, wodurch eine Verdrehung der beiden Rampenscheiben 10,13 gegeneinander entgegen der Kraft der Drehfeder 17 und somit ein unbeabsichtigtes Lösen der Bremse verhindert wird. Weiterhin weisen die beiden Rampenscheiben 10,13 bei aktivierter Feststellbremseinrichtung 6 (siehe Fig. 5b) eine gegenüber der Abmessung h₂ im gelösten Bremsenzustand größere Abmessung h₁ in Zuspannrichtung 5 auf.

Im verriegelten Zustand der Scheibenbremse wird die gesamte Zuspannkraft durch die Feststellbremseinrichtung 6 im Bremsgehäuse 1 abgestützt. Der für die Zuspannung erforderliche hydraulische Druck ist somit nicht weiter erforderlich und kann bei aktivierter Feststellbrmeseinrichtung 6 abgebaut werden, ohne daß sich die Bremse löst.

Ein Lösen der mittels der Feststellbremseinrichtung 6 verriegelten Scheibenbremse erfolgt durch Drehbewegung der Betätigungswelle 9 in Lösedrehrichtung 36, das heißt entgegengesetzt zur Zuspanndrehrichtung 33. Durch Beaufschlagung der Betätigungswelle 9 mit dem Lösedrehmoment werden zunächst die beiden Rampenscheiben 10,13 gegeneinander verdreht, wobei die Wälzkörper 15 von ihrem ersten Endanschlag 34 bis zu ihrem zweiten Endanschlag 37 innerhalb der Rampenbahn 28 abrollen. Während der Rollbewegung der Wälzkörper 15 zwischen den beiden Endanschlägen 34 und 37 wird somit kein Drehmoment von der Betätigungswelle 9 auf die Spindelwelle 14 übertragen. Erst wenn die Wälzkörper 15 den zweiten Endanschlag 37 erreicht haben, können beide Rampenscheiben 10,13 von der Betätigungswelle 9 gleichsam in Lösedrehrichtung 36 gedreht werden. Durch das Abrollen der Wälzkörper in den Rampenbahnen wird infolge der Neigung der Rampenbahnen 28 das Längenmaß der Wälzkörperrampenvorrichtung 6 in Zuspannrichtung 5 reduziert. Liegen die Wälzkörper 15 am zweiten Endanschlag 37 an, so ist ein Längenmaß h₂ für die Löseposition der Wälzkörperrampenvorrichtung erreicht, welches kleiner ist als das Längenmaß h₁ im Zuspannzustand der Wälzkörperrampenvorrichtung. Insgesamt wird durch die Reduzierung des Längenmaßes der Wälzkörperrampenvorrichtung während des Abrollens der Wälzkörper innerhalb der Rampenbahnen 28 ein wesentlicher Bestandteil der Spannkräfte aus der Feststellbremseinrichtung 6 abgebaut, wodurch schließlich ein Zurückdrehen der Mutter 22 entgegen der Zuspannrichtung 5 bei Erreichen der Wälzkörper in der Position am zweiten Endanschlag 37 unter geringem Drehmomentaufwand ermöglicht wird. Das über die Betätigungswelle 9 aufzubringende Lösedrehmoment ist durch den vollständigen bzw. zumindest wesentlichen Abbau der Axialkraft innerhalb der Feststellbremseinrichtung 6 während des Abrollens der Wälzkörper zwischen den beiden Endanschlägen entsprechend gering. Dies eröffnet die Möglichkeit der Verwendung kleiner Elektromotoraggregate mit geringer Leistung.

Durch die erfindungsgemäße Anordnung der Feststellbremseinrichtung 6 wird es sogar gestattet, bei Ausfall der hydraulischen Betätigungseinrichtung, das heißt kein hydraulischer Druckaufbau möglich, im Sinne einer Notbremsfunktion zumindest eine gewisse Zuspannkraft innerhalb der Scheibenbremse aufzubauen, wobei die Größe der Zuspannkraft letztlich durch das Antriebsmoment des auf die Betätigungswelle 9 einwirkenden Elektromotoraggregates begrenzt ist.

In Analogie zu den in den Figuren dargestellten Ausführungen der Mutter-Spindel-Anordnung 7 ist es selbstverständlich möglich, im Sinne einer mechanischen Umkehr die zweite Rampenscheibe 13 drehfest mit einer im Bremskolben 2 drehbaren Mutter 22 drehfest zu koppeln, während die Spindelwelle 14 drehfest am Bremskolben 2 befestigt ist. In einem solchen Fall würde sich die Mutter 22 gegenüber der Spindelwelle 14 verdrehen können und dadurch eine Verschiebung der Spindelwelle 14 mit Kolben 2 in bzw. entgegen der Zuspannrichtung 5 ermöglichen.

## Patentansprüche

1. Scheibenbremse mit Feststellbremsfunktion, insbesondere für Kraftfahrzeuge, mit einem in einem Bremsgehäuse (1) verschiebbar angeordneten Bremskolben (2) zur hydraulischen Zuspannung, mit einer separat betätigbaren Feststellbremseinrichtung (6), welche eine Betätigungswelle (9) und eine mit dieser mechanisch koppelbaren, sich am Bremskolben (2) abstützende Mutter-Spindel-Anordnung (7) aufweist, **dadurch gekennzeichnet, daß** die Feststellbremseinrichtung (6) eine Wälzkörperrampenvorrichtung (8) zur Übertragung eines Drehmomentes auf die Mutter-Spindel-Anordnung (7) und zum Abstutzen der Fertstellbremseinrichtung (6) im Bremsgehäuse (1) umfaßt.

2. Scheibenbremse nach Anspruch 1, **dadurch gekennzeichnet, daß** die Wälzkörperrampenvorrichtung zwei relativ zueinander verdrehbare Rampenscheiben (10,13) mit dazwischenliegenden Wälzkörpern (15) aufweist, wobei eine erste Rampenscheibe (10) drehfest an der Betätigungswelle (9) und eine zweite Rampenscheibe (13) drehfest an einer Spindelwelle (14) bzw. einer Mutter (22) der Mutter-Spindel-Anordnung (7) angeordnet ist, wobei das jeweils andere Bauteil der Mutter-Spindel-Anordnung (7), das heißt die Mutter (22) bzw. die Spindelwelle (14) verdrehfest am Bremskolben (2) angeordnet ist.

3. Scheibenbremse nach Anspruch 2, **dadurch gekennzeichnet, daß** die Mutter (22) über ein selbsthemmendes Gewinde (23) drehbar an der Spindelwelle (14) angeordnet ist.

4. Scheibenbremse nach einem der vorhergehenden Ansprüche, **dadurch gekennzeichnet, daß** zumindest eine der Rampenscheiben (10,13) wenigstens eine Rampenbahn (28) zur Aufnahme mindestens eines Wälzkörpers (15) aufweist, wobei die Rampenbahn (28) unter einer Neigung bezogen auf die Zuspannrichtung (5) des Bremskolbens verläuft und an beiden Enden einen Endanschlag (34,37) für den Wälzkörper (15) zur Drehmomentenübertragung aufweist.

5. Scheibenbremse nach einem der vorhergehenden Ansprüche, **dadurch gekennzeichnet, daß** die Wälzkörperrampenvorrichtung (8) eine Axialfeder (20) umfaßt, die die beiden Rampenscheiben (10,13) bezogen auf die Zuspannrichtung (5) gegeneinander verspannt.

6. Scheibenbremse nach einem der vorhergehenden Ansprüche, **dadurch gekennzeichnet, daß** die Wälzkörperrampenvorrichtung (8) eine Drehfeder (17) umfaßt, die die beiden Rampenscheiben (10,13), bezogen auf die Drehrichtung (33,36) der Betätigungswelle gegeneinander verspannt.

7. Scheibenbremse nach einem der Ansprüche 5 oder 6, **dadurch gekennzeichnet, daß** die Wälzkörperrampenvorrichtung (8) eine Feder (17,20) umfaßt, die die Rampenscheiben (10,13) sowohl bezogen auf die Zuspannrichtung (5) als auch bezogen auf die Drehrichtung (33,36) der Betätigungswelle (9) gegeneinander verspannt.

8. Scheibenbremse nach einem der Ansprüche 6 oder 7, **dadurch gekennzeichnet, daß** die zweite Rampenscheibe (13) gegenüber der ersten Rampenscheibe (10) entgegen der Zuspanndrehrichtung (33) der Betätigungswelle verspannt ist.

9. Scheibenbremse nach Anspruch 4, **dadurch gekennzeichnet, daß** der Wälzkörper (15) in zumindest einer Position am Endanschlag (34,37) innerhalb der Rampenbahn (28) auf einem Rampenbahnabschnitt (35) aufliegt, der senkrecht zur Zuspannrichtung (5) verläuft.

10. Scheibenbremse nach einem der vorhergehenden Ansprüche, **dadurch gekennzeichnet, daß** ein Elektromotoraggregat zum Antrieb der Betätigungswelle (9) vorgesehen ist.

## Claims

1. Disc brake with a parking brake function, in particular for motor vehicles, including a brake piston (2) for hydraulic application purposes that is displaceably arranged in a brake housing (1), a separately operable parking brake device (6) which is equipped with an actuating shaft (9) and a nut-and-spindle assembly (7) which can be coupled mechanically with the shaft and is supported on the brake piston (2),
**characterized in that** the parking brake device (6) comprises a roll-body/ramp device (8) to transmit a torque to the nut-and-spindle assembly (7) and to support the parking brake device (6) in the brake housing (1).

2. Disc brake as claimed in claim 1,
**characterized in that** the roll-body/ramp device includes two ramp discs (10, 13) being rotatable relative to one another and having roll bodies (15) interposed between each other, with one first ramp disc (10) being arranged non-rotatably at the actuating shaft (9), while a second ramp disc (13) is arranged non-rotatably at a spindle shaft (14) or a nut (22) of the nut-and-spindle assembly (7), and the respectively other component of the nut-and-spindle assembly (7), that means the nut (22) or the spindle shaft (14), respectively, is arranged at the brake piston (2) in a non-rotatable manner.

3. Disc brake as claimed in claim 2,
**characterized in that** the nut (22) is arranged at the spindle shaft (14) in a rotatable manner by means of a self-locking thread (23).

4. Disc brake as claimed in any one or the preceding claims,
**characterized in that** at least one of the ramp discs (10, 13) includes at least one ramp track (28) for accommodating at least one roll body (15), and the ramp track (28) is sloped in relation to the direction of application (5) of the brake piston and, at both ends, has an end stop (34, 37) for the roll body (15) for torque transmission purposes.

5. Disc brake as claimed in any one of the preceding claims,
**characterized in that** the roll-body/ramp device (8) comprises an axial spring (20) tensioning the two ramp discs (10, 13) with respect to each other in relation to the direction of application (5).

6. Disc brake as claimed in any one of the preceding claims,
**characterized in that** the roll-body/ramp device (8) comprises a torsion spring (17) tensioning the two ramp discs (10, 13) with respect to each other in relation to the direction of rotation (33, 36) of the actuating shaft.

7. Disc brake as claimed in any one of claims 5 or 6,
**characterized in that** the roll-body/ramp device (8) comprises a spring (17, 20) tensioning the two ramp discs (10, 13) with respect to each other in relation to the direction of application (5) and also in relation to the direction of rotation (33, 36) of the actuating shaft (9).

8. Disc brake as claimed in any one of claims 6 or 7,
**characterized in that** the second ramp disc (13) is tensioned with respect to the first ramp disc (10) in opposition to the direction of rotation (33) of the actuating shaft.

9. Disc brake as claimed in claim 4,
**characterized in that** the roll body (15) bears at least in one position against the end stop (34, 37) within the ramp track (28) on a ramp track portion (35) which extends vertically in relation to the direction of application (5).

10. Disc brake as claimed in any one of the preceding claims,
**characterized in that** an electric motor aggregate is provided to drive the actuating shaft (9).

## Revendications

1. Frein à disque à fonction de frein de stationnement, en particulier pour véhicule automobile, comportant un piston de frein (2) disposé coulissant dans un boîtier de frein (1) pour le serrage hydraulique, comportant un dispositif de frein de stationnement (6) à actionnement séparé qui comporte un arbre d'actionnement (9) et un agencement broche-écrou (7) pouvant être couplé mécaniquement à l'arbre d'actionnement et prenant appui contre le piston de frein (2), **caractérisé en ce que** le dispositif de frein de stationnement (6) comprend un dispositif à rampes pour corps de roulement (8) pour la transmission d'un couple de rotation à l'agencement broche-écrou (7) et pour l'appui du dispositif de frein de stationnement (6) dans le boîtier de frein (1).

2. Frein à disque selon la revendication 1, **caractérisé en ce que** le dispositif à rampes pour corps de roulement comporte deux disques à rampes (10, 13) pouvant tourner l'un par rapport à l'autre avec des corps de roulement (15) intercalés, un premier disque à rampes (10) étant disposé solidairement en rotation sur l'arbre d'actionnement (9) et un deuxième disque à rampes (13) solidairement en rotation sur un arbre de broche (14) ou un écrou (22) de l'agencement broche-écrou (7), l'autre composant de l'agencement broche-écrou (7), c'est-à-dire l'écrou (22) ou l'arbre de broche (14) étant disposé solidairement en rotation sur le piston de frein (2).

3. Frein à disque selon la revendication 2, **caractérisé en ce que** l'écrou (22) est disposé de manière à pouvoir tourner sur l'arbre de broche (14), par un filetage (23) autobloquant.

4. Frein à disque selon l'une des revendications précédentes, **caractérisé en ce qu'**au moins l'un des disques à rampes (10, 13) présente au moins une piste de rampe (28) pour recevoir au moins un corps de roulement (15), la piste de rampe (28) s'étendant inclinée par rapport à la direction de serrage (5) du piston de frein, et comportant aux deux extrémités une butée terminale (34, 37) pour le corps de roulement (15), en vue de la transmission du couple de rotation.

5. Frein à disque selon l'une des revendications précédentes, **caractérisé en ce que** le dispositif à rampes et corps de roulement (8) comprend un ressort axial (20) qui serre l'un contre l'autre les deux disques à rampes (10, 13) par rapport à la direction de serrage (5).

6. Frein à disque selon l'une des revendications précédentes, **caractérisé en ce que** le dispositif à rampes et corps de roulement (8) comprend un ressort de torsion (17) qui serre l'un contre l'autre les deux disques à rampes (10, 13) par rapport au sens de rotation (33, 36) de l'arbre d'actionnement.

7. Frein à disque selon l'une des revendications 5 ou 6, **caractérisé en ce que** le dispositif à rampes et corps de roulement (8) comprend un ressort (17, 20) qui serre l'un contre l'autre les disques à rampes (10, 13) aussi bien par rapport au sens de serrage (5) que par rapport au sens de rotation (33, 36) de l'arbre d'actionnement (9).

8. Frein à disque selon l'une des revendications 6 ou 7, **caractérisé en ce que** le deuxième disque à rampes (13) est serré par rapport au premier disque à rampes (10) dans le sens contraire au sens de rotation de serrage (33) de l'arbre d'actionnement.

9. Frein à disque selon la revendication 4, **caractérisé en ce que** le corps de roulement (15) repose, dans au moins une position, sur la butée terminale (34, 37), à l'intérieur de la piste de rampe (28), sur un tronçon de piste de rampe (35) qui s'étend perpendiculairement à la direction de serrage (5).

10. Frein à disque selon l'une des revendications précédentes, **caractérisé en ce qu'**il est prévu un groupe à moteur électrique pour l'entraînement de l'arbre d'actionnement (9).
